Europäisches Patentamt

European Patent Office

Office européen des brevets

(19)

(11) Veröffentlichungsnummer: **0 219 599**
A1

(12) # EUROPÄISCHE PATENTANMELDUNG

(21) Anmeldenummer: 86106083.8

(22) Anmeldetag: 02.05.86

(51) Int. Cl.⁴: **B 23 Q 1/08**
B 23 Q 1/26, F 16 C 25/02

(30) Priorität: 04.07.85 DE 8519451 U

(43) Veröffentlichungstag der Anmeldung:
29.04.87 Patentblatt 87/18

(84) Benannte Vertragsstaaten:
AT BE CH DE FR GB IT LI LU NL SE

(71) Anmelder: Hoesch Maschinenfabrik Deutschland
Aktiengesellschaft
Borsigstrasse 22
D-4600 Dortmund 1(DE)

(72) Erfinder: Brinkmann, Dirk, Dipl.-Ing.
In der Heide 3
D-4670 Lünen-Niederaden(DE)

(72) Erfinder: Reske, Wilfried
Am Springe 15
D-5840 Schwerte 3(DE)

(74) Vertreter: Kremser, Manfred, Dipl.-Ing.
Eberhardstrasse 12
D-4600 Dortmund 1(DE)

(54) Pinolenführung für Werkzeugmaschinen, insbesondere Drehmaschinen.

(57) Bei einer Pinolenführung für Werkzeugmaschinen, insbesondere Drehmaschinen, mit zwei die Pinole führenden Führungshülsen, die in eine Bohrung eines Gehäuses eingesetzt sind, wobei durch axiales Verspannen der Führungshülsen das Einstellen des radialen Führungsspiels der Pinole erfolgt, ist zwischen den beiden Führungshülsen (4, 5) eine auf diese wirksame Spannvorrichtung (6) angeordnet, damit der Zeitaufwand für das Einstellen der beiden Führungshülsen auf eine gleiches Führungsspiel der Pinole sehr gering gehalten werden kann.

Fig. 1

EP 0 219 599 A1

Hoesch Maschinenfabrik Deutschlang AG
Borsigstraße 22, 4600 Dortmund 1

Pinolenführung für Werkzeugmaschinen, insbesondere Drehmaschinen

Die Neuerung bezieht sich auf eine Pinolenführung für Werkzeugmaschinen, insbesondere Drehmaschinen, mit zwei die Pinole
führenden Führungshülsen, die in eine Bohrung eines Gehäuses
eingesetzt sind, wobei durch axiales Verspannen der Führungshülsen das Einstellen des radialen Führungsspiels der Pinole
erfolgt.

Pinolenführungen der vorgenannten Art enthalten zum Einstellen des radialen Führungsspiels der Pinole zwei von Hand
betätigbare Spannvorrichtungen, von denen jede ein axiales
Verspannen einer Führungshülse bewirkt.

In der Praxis hat sich herausgestellt, daß der Zeitaufwand für
das Einstellen der beiden Führungshülsen auf ein gleiches
Führungsspiel der Pinole verhältnismäßig groß ist.

Der Neuerung liegt die Aufgabe zugrunde, eine Pinolenführung
der eingangs genannten Art so auszubilden, daß der Zeitaufwand
für das Einstellen der beiden Führungshülsen auf ein gleiches
Führungsspiel der Pinole sehr gering gehalten werden kann.

Neuerungsgemäß wird diese Aufgabe dadurch gelöst, daß zwischen
den beiden Führungshülsen eine auf diese wirksame Spannvorrichtung angeordnet ist.

In weiterer Ausgestaltung der Neuerung weist die Spannvorrichtung einen Spannring und einen Stützring auf.

Vorzugsweise ist der Spannring mit mehreren in Richtung der
Pinolenachse wirkenden Spannschrauben ausgeführt.

0219599

Die dem Spannring zugewendete Führungshülse weist Druchgangsbohrungen zum Einschieben eines mit den Spannschrauben kuppelbaren Schlüssels auf.

Beide Führungshülsen sind gleich ausgeführt.

Im folgenden wird die Neuerung anhand einer Zeichnung, in der
ein Ausführungsbeispiel schematisch dargestellt ist, näher beschrieben.

Es zeigt

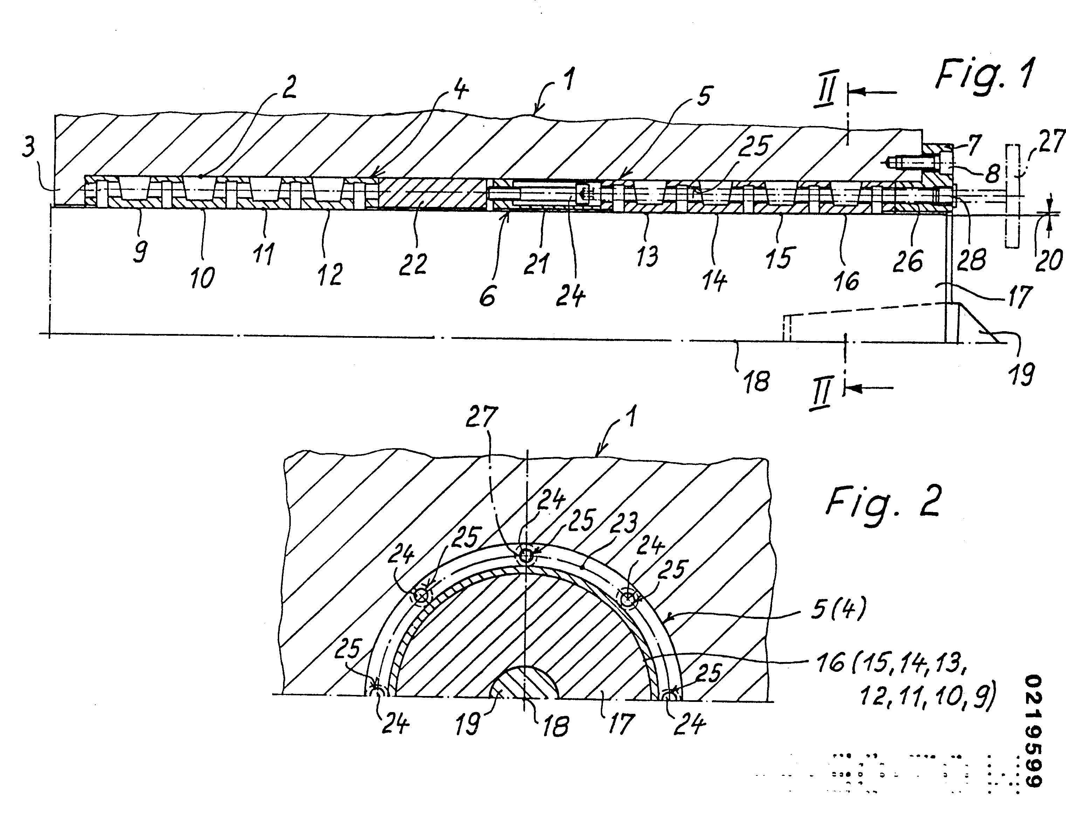

Fig. 1 einen Teillängsschnitt durch eine Pinolenführung einer
       Radsatzdrehmaschine,

Fig. 2 einen Teilschnitt entsprechend der Linie II-II in Fig. 1.

Ein Reitstockgehäuse 1 ist mit einer zylindrischen Bohrung 2
und einem ringförmigen Absatz 3 versehen.

Die Bohrung 2 dient der Aufnahme und Zentrierung zweier Führungshülsen 4, 5, einer zwischen den Führungshülsen 4, 5 angeordneten
Spannvorrichtung 6 und eines Flansches 7.

Der Flansch 7 ist mittels Schrauben 8 an das Reitstockgehäuse 1
angeschraubt.

Die Führungshülsen 4, 5 enthalten je vier zylindrische Führungsflächen 9, 10, 11, 12, 13, 14, 15, 16, die eine zylindrische
Pinole 17 führen.

Die Pinole 17 ist in Richtung der Pinolenachse 18 verschiebbar
angeordnet.

Eine in die Pinole 17 eingesetzte Körnerspitze ist mit 19 bezeichnet.

0219599

Das Einstellen des radialen Führungsspiels 20 der Pinole 17 erfolgt durch die Spannvorrichtung 6, die ein Zusammendrücken
der Führungshülsen 4, 5 in Richtung der Pinolenachse 18 und
damit eine Verringerung des Durchmessers der zylindrischen
Führungsflächen 9, 10, 11, 12, 13, 14, 15, 16 bewirkt.

Die Spannvorrichtung 6 setzt sich aus einem Spannring 21, einem
Stützring 22 und acht auf einem Lochkreis 23 gleichmäßig verteilten Spannschrauben 24 zusammen.

Den acht Spannschrauben 24 sind acht koaxiale Durchgangsbohrungen 25 der Spannhülse 5 und acht koaxiale Löcher 26 des
Flansches 7 zugeordnet, in die ein mit den Spannschrauben 24
kuppelbarer Schlüssel 27 einschiebbar ist.

Die acht Löcher 26 des Flansches 7 sind mit je einem Stopfen
28 verschließbar.

Aus Gründen der Federcharakteristik sind beide Führungshülsen
4, 5 gleich ausgeführt.

Hoesch Maschinenfabrik Deutschland AG
Borsigstraße 22, 4600 Dortmund 1

Ansprüche:

1. Pinolenführung für Werkzeugmaschinen, insbesondere Drehmamaschinen, mit zwei die Pinole führenden Führungshülsen, die
in eine Bohrung eines Gehäuses eingesetzt sind, wobei durch
axiales Verspannen der Führungshülsen das Einstellen des
radialen Führungsspiels der Pinole erfolgt, dadurch gekennzeichnet, daß zwischen den beiden Führungshülsen (4, 5) eine
auf diese wirksame Spannvorrichtung (6) angeordnet ist.

2. Pinolenführung nach Anspruch 1, dadurch gekennzeichnet, daß
die Spannvorrichtung (6) einen Spannring (21) und einen
Stützring (22) aufweist.

3. Pinolenführung nach den Ansprüchen 1 und 2, dadurch gekennzeichnet, daß der Spannring (21) mehrere in Richtung der
Pinolenachse (18) wirkende Spannschrauben (24) aufweist.

4. Pinolenführung nach den Ansprüchen 1 bis 3, dadurch gekennzeichnet, daß die dem Spannring (21) zugewendete Führungshülse (5) Durchgangsbohrungen (25) zum Einschieben eines
mit den Spannschrauben (24) kuppelbaren Schlüssels (27)
aufweist.

5. Pinolenführung nach den Ansprüchen 1 bis 4, dadurch gekennzeichnet, daß die Führungshülsen (4, 5) gleich ausgeführt
sind.

Fig. 1

Fig. 2

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | WERKSTATT UND BETRIEB, ZEITSCHRIFT FÜR MASCHINENBAU UND FERTIGUNG, Band 97, August 1964, Seiten 583-585, Carl Hanser Zeitschriftenverlag GmbH, München, DE; R. SPIETH et al.: "Zentrisches Führen und zentrisches Spannen axialbeweglicher kreiszylindrischer Maschinenteile" * Seite 584, rechte Spalte, Zeilen 29-31; Seite 585, linke Spalte, Zeilen 1-5, rechte Spalte, Zeilen 37-42; Abbildungen 6,7,9 * | 1,2,5 | B 23 Q 1/08 <br> B 23 Q 1/26 <br> F 16 C 25/02 |
| | --- | | |
| A | DE-B-1 750 244 (SPIETH) <br> * Abbildung 5 * | 1 | |
| | --- | | RECHERCHIERTE SACHGEBIETE (Int. Cl.4) |
| A | DE-A-2 512 072 (OERTLI) <br> ----- | 1 | B 23 Q <br> F 16 C <br> B 23 B |

Der vorliegende Recherchenbericht wurde für alle Patentansprüche erstellt.

| Recherchenort <br> DEN HAAG | Abschlußdatum der Recherche <br> 04-11-1986 | Prüfer <br> DE GUSSEM J.L. |
|---|---|---|